# EUROPEAN PATENT SPECIFICATION

(11) **EP 4 148 338 B1**
(45) Date of publication and mention of the grant of the patent: **16.07.2025**
(21) Application number: 22195177.5
(22) Date of filing: 12.09.2022
(51) Int. Cl.: F24S 25/30, F24S 25/634, F24S 25/70, H02S 20/23, F24S 25/00, F24S 25/60

(54) **COMBINATION OF CLAMP AND PROFILE BEAM**
KOMBINATION AUS KLAMMER UND PROFILTRÄGER
COMBINAISON DE PINCE ET DE POUTRE PROFILÉE

(30) Priority: 14.09.2021 NL 2029183
(43) Date of publication of application: 15.03.2023
(73) Proprietor: Enstall Europe B.V., 7418 EE Deventer (NL)
(72) Inventor: Jurg, Ruben, 3853 MJ Ermelo (NL)
(74) Representative: Patentwerk B.V.

(56) References cited:
- EP-B1- 2 885 822
- DE-A1- 102009 012 026
- NL-B1- 2 018 345
- US-B2- 8 480 330

## Description

The invention relates to a combination of a clamp and a profile beam, particularly for arranging the clamp on a tile hook and for mounting solar panels on the profile beam.

Tile hooks with arranged thereon a clamp for coupling to a profile beam are known in the prior art. The clamp is adapted to the profile of the profile beam so that the profile beam can be clamped fixedly in the clamp in simple manner, often by means of a snap connection.

To mount solar panels on a roof it is possible to arrange the profile beams either horizontally on the roof or vertically, i.e. parallel to the roof pitch. It is known to make the clamp on the tile hook rotatable so that the known tile hooks can be used for both horizontal mounting of the profile beams and for vertical mounting. Document NL 2 018 345 B1 shows such a clamp.

Arranging a clamp rotatably on a tile hook requires additional parts, such as a pivot pin or a bolt and nut, this increasing the costs of a tile hook.

There is additionally a chance that, due to the rotatability of the clamp, it will not be in the correct position at the moment that a profile beam is being clamped. This can for instance be because a technician has not placed the clamps in the correct position during placing of the tile hooks, or because someone has accidentally knocked into the clamp during the work, thus rotating it.

It is now an object of the invention to reduce or even obviate the above stated drawbacks.

This object is achieved according to the invention with a combination of a clamp and a profile beam
wherein the profile beam has a contact surface and has two parallel clamping surfaces lying perpendicularly of the contact surface and lying opposite each other, which clamping surfaces extend in longitudinal direction of the profile beam
wherein the clamp comprises:
   - a support body with a support surface on which the profile beam with the contact surface is supported while lying thereagainst;
   - a first pair of clamping fingers standing upright from the support surface and engaging on the clamping surfaces of the profile beam in a first position;
   - a second pair of clamping fingers standing upright from the support surface and engaging on the clamping surfaces of the profile beam in a second position;
wherein the profile beam comprises a channel, which channel extends in longitudinal direction of the profile beam and is arranged in the contact surface and between the two clamping surfaces,
wherein the width and the depth of the channel are greater than the width and the height of the first pair of clamping fingers and than the width and height of the second pair of clamping fingers.

Provided on the clamp are two pairs of clamping fingers which can hold the profile beam in two different positions. These positions are preferably perpendicular to each other, although it is also possible to envisage an angle other than 90° being applied between the two positions.

The channel in the profile beam ensures that the pair of clamping fingers not in use in the desired position can protrude into the channel of the profile beam and thereby do not prevent the profile beam from being clamped in the desired position.

In order to ensure that the unused clamping fingers can be received in the channel, the channel must have at least a depth which is equal to the height of the unused clamping fingers, and the channel must have at least a width which is equal to the width of the unused clamping fingers.

The width of the clamping fingers is the main dimension in the direction parallel to the clamping surface and in longitudinal direction of the profile beam, when the clamping fingers engage on the clamping surfaces, and the height of the clamping fingers is the main dimension in the direction parallel to the clamping surface and perpendicularly of the support surface of the clamp.

In an embodiment of the combination according to the invention the projection of the second pair of clamping fingers, as seen in the clamping direction of the second pair of clamping fingers, falls inside the cross-section of the channel in the first position of the profile beam on the clamp, and the projection of the first pair of clamping fingers, as seen in the clamping direction of the first pair of clamping fingers, falls inside the cross-section of the channel in the second position of the profile beam on the clamp.

A profile beam is formed from an extruded profile with a uniform cross-section. In this way the channel can be formed over the whole length in simple manner, but can optionally also be arranged at discrete positions by means of milling a channel into an extruded profile.

In both cases the cross-section of the channel will have to be formed such that the projection of both pairs of clamping fingers, as seen in the clamping direction thereof, falls inside this cross-section when the profile beam is clamped onto the clamp in both positions.

In a preferred embodiment of the combination according to the invention a rib is arranged on both clamping surfaces, which rib extends in longitudinal direction of the profile beam and wherein at least the clamping fingers of the first pair of clamping fingers are each provided with a resilient tongue which extends from the top of the clamping finger down, in the direction of the clamping surface and in the direction of the support surface, and here hooks behind the rib on the relevant clamping surface.

The resilient tongue on both clamping fingers ensures that the profile beam can be pressed with both ribs between the clamping fingers. The resilient tongues will here bend away slightly until the rib has been passed, after which the resilient tongues bend back and hook behind the ribs. It can hereby be prevented that the profile beam can be easily pulled out of the clamp, for instance by heavy wind which moves over the roof and tries to carry away solar panels mounted on the profile beam.

In a further preferred embodiment of the combination according to the invention each of the clamping fingers of the first pair of clamping fingers is further provided with an uncoupling tongue, which is arranged fixedly on the top of the clamping finger and wherein the uncoupling tongue extends away from the support surface and from the clamping surface.

With the uncoupling tongue the clamping finger can be bent aside, whereby the resilient tongue comes away from the rib and the profile beam is released. This simplifies dismounting of the profile beam.

In another embodiment of the combination according to the invention a longitudinal groove is arranged in at least one of the clamping surfaces, which longitudinal groove has an overhanging edge, which edge extends in the plane of the clamping surface;
and wherein in the second position of the profile beam on the clamp at least one clamping finger of the second pair of clamping fingers protrudes into the longitudinal groove and hooks behind the overhanging edge.

For a horizontal mounting of the profile beam in particular it may be advantageous for the profile beam to first be suspended from the clamp loosely before being clamped into place. Because in this embodiment a clamping finger of the second pair of clamping fingers protrudes into the longitudinal groove and hooks behind the overhanging edge in the second position of the profile beam on the clamp, the profile beam can as it were be suspended from the clamp even before the profile beam is definitively clamped in place.

Yet another embodiment of the combination according to the invention further comprises a tile hook, wherein the clamp is arranged on an end part of the tile hook.

These and other features of the invention are further elucidated with reference to the accompanying drawings.
Figure 1 is a perspective view of an embodiment of a combination according to the invention.
Figure 2 is a perspective view of the clamp according to figure 1.
Figure 3 is a side view of the clamp according to figure 2 with clamped thereon a profile beam in a horizontal position.
Figure 4 is a side view of the clamp according to figure 2 with clamped thereon a profile beam in a vertical position.

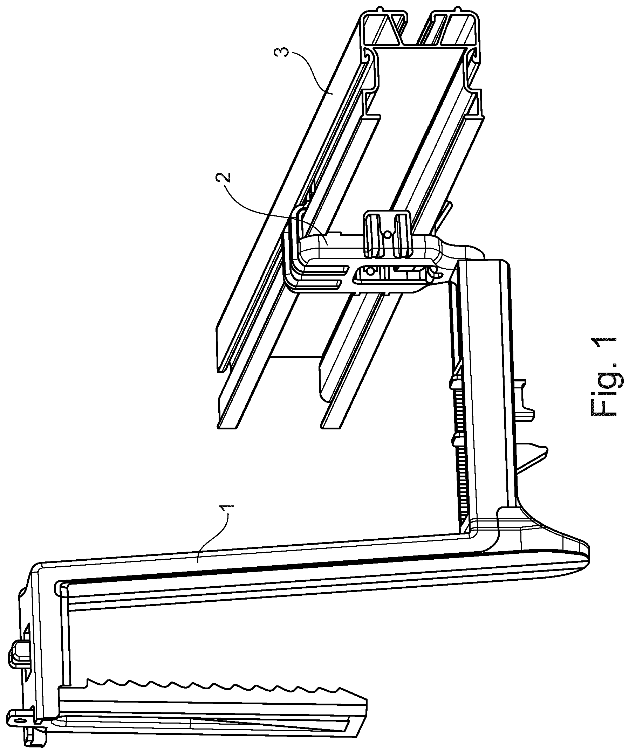

Figure 1 shows a tile hook 1 on which a clamp 2 is arranged on an end part. A profile beam 3 is clamped in clamp 2 in a horizontal position.

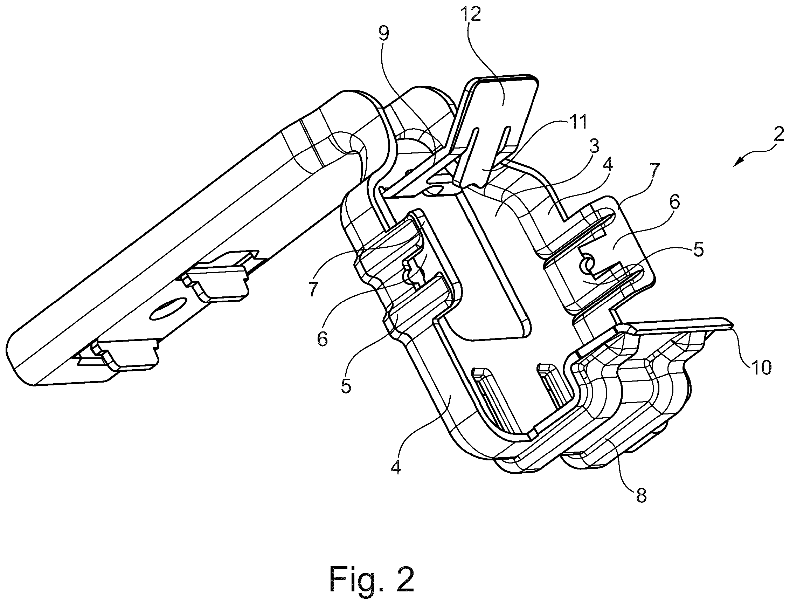

Figure 2 shows the clamp 2 in more detail. Clamp 2 has a support body which is formed by a substantially square plate part with upright walls 4. The upper edges of the upright walls 4 form a support surface for the profile beam 3.

Arranged along two parallel upright walls 4 are a first pair of clamping fingers 5. Each clamping finger 5 has a resilient tongue 6 which extends from the top of the clamping finger 5 down, in the direction of the support surface formed by the upper edges of walls 4. Further arranged on clamping fingers 5 is an uncoupling tongue 7 which extends away from the support surface.

Provided at right angles to the first pair of clamping fingers 5 is a second pair of clamping fingers 8, 9. Clamping finger 8 is provided at the top of finger 8 with an outward bent edge 10. In respect of construction the clamping finger 9 is similar to a clamping finger 5 of the first pair, and also has a resilient tongue 11 and an uncoupling tongue 12.

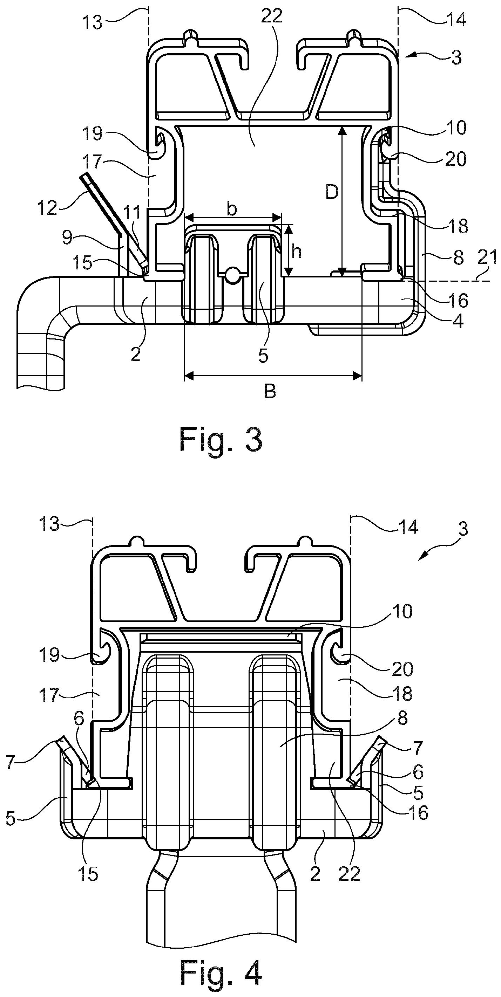

Figure 3 shows a side view of the clamp 2 and the profile beam 3 in a horizontal position. Horizontal position is understood to mean the direction in which profile beam 3 extends when arranged on a pitched roof with tile hook 1. The vertical position is the position wherein profile beam 3 runs parallel to the pitch of the roof.

Profile beam 3 has on either side a clamping surface 13, 14 on each of which a rib 15, 16 is arranged. Further provided in both clamping surfaces 13, 14 is a longitudinal groove 17, 18, each with an overhanging edge 19, 20. The lower surface of the profile beam 3 forms a contact surface 21 which rests on the support surface formed by the upright walls 4.

Further provided in this contact surface 21 is a channel 22 extending in longitudinal direction of profile beam 3. The channel has a width B and a depth D.

As shown in figure 3, the clamping finger 8 is placed with the outward bent edge 10 into the longitudinal groove 19 and here hooks behind the overhanging edge 20. On the other side the resilient tongue 11 of clamping finger 9 hooks behind the rib 15, whereby profile beam 3 is held and clamped in clamp 2.

It will further be apparent from figure 3 that the clamping fingers 5 of the first pair, these each having a width b and a height h, fall inside the cross-section of channel 22.

In figure 4 the profile beam 3 is clamped in clamp 2 in the vertical position. In this position clamping fingers 5 clamp against the clamping surfaces 13, 14 of profile beam 3 and the resilient tongues 6 of these clamping fingers 5 hook behind the ribs 15, 16. In this vertical position the second pair of clamping fingers 8, 9 falls inside channel 22.

## Claims

1. Combination of a clamp (2) and a profile beam (3) wherein the profile beam (3) has a contact surface (21) and has two parallel clamping surfaces (13, 14) lying perpendicularly of the contact surface and lying opposite each other, which clamping surfaces (13, 14) extend in longitudinal direction of the profile beam (3)
wherein the clamp (2) comprises:
- a support body with a support surface on which the profile beam with the contact surface is supported while lying thereagainst;
- a first pair of clamping fingers (5) standing upright from the support surface and engaging on the clamping surfaces (13, 14) of the profile beam (3) in a first position;
- a second pair of clamping fingers (8,9) standing upright from the support surface and engaging on the clamping surfaces (13, 14) of the profile beam (3) in a second position;
wherein the profile beam (3) comprises a channel (22) , which channel (22) extends in longitudinal direction of the profile beam and is arranged in the contact surface and between the two clamping surfaces (13, 14),
wherein the width and the depth of the channel (22) are greater than the width and the height of the first pair of clamping fingers (5) and than the width and height of the second pair of clamping fingers (8, 9).

2. Combination according to claim 1, wherein the projection of the second pair of clamping fingers (8,9), as seen in the clamping direction of the second pair of clamping fingers (8,9), falls inside the cross-section of the channel (22) in the first position of the profile beam on the clamp (2), and wherein the projection of the first pair of clamping fingers (5), as seen in the clamping direction of the first pair of clamping fingers (5), falls inside the cross-section of the channel (22) in the second position of the profile beam (3) on the clamp (2).

3. Combination according to claim 1 or 2, wherein a rib (15, 16) is arranged on both clamping surfaces, which rib extends in longitudinal direction of the profile beam (3) and wherein at least the clamping fingers of the first pair of clamping fingers (5) are each provided with a resilient tongue (6) which extends from the top of the clamping finger down, in the direction of the clamping surface and in the direction of the support surface, and here hooks behind the rib (15,16) on the relevant clamping surface (13,14).

4. Combination according to claim 3, wherein each of the clamping fingers of the first pair of clamping fingers (5) is further provided with an uncoupling tongue (7), which is arranged fixedly on the top of the clamping finger and wherein the uncoupling tongue (7) extends away from the support surface and from the clamping surface (13,14).

5. Combination according to any one of the foregoing claims, wherein a longitudinal groove (17, 18) is arranged in at least one of the clamping surfaces (13,14), which longitudinal groove (17,18) has an overhanging edge (19,20), which edge extends in the plane of the clamping surface (13,14);
and wherein in the second position of the profile beam (3) on the clamp (2) at least one clamping finger of the second pair of clamping fingers (8,9) protrudes into the longitudinal groove and hooks behind the overhanging edge (19,20).

6. Combination according to any one of the foregoing claims, further comprising a tile hook (1), wherein the clamp (2) is arranged on an end part of the tile hook (1).

## Patentansprüche

1. Kombination aus einer Klammer (2) und einem Profilträger (3), wobei der Profilträger (3) eine Kontaktfläche (21) und zwei senkrecht zu der Kontaktfläche liegende und einander gegenüberliegende parallele Klemmflächen (13, 14) aufweist, wobei sich die Klemmflächen (13, 14) in Längsrichtung des Profilträgers (3) erstrecken,
wobei die Klammer (2) umfasst:
- einen Stützkörper mit einer Stützfläche, auf der der Profilträger mit der Kontaktfläche anliegend abgestützt ist;
- ein erstes Paar von Klemmfingern (5), die von der Stützfläche aufrecht abstehen und in einer ersten Position an den Klemmflächen (13, 14) des Profilträgers (3) angreifen;
- ein zweites Paar von Klemmfingern (8, 9), die von der Stützfläche aufrecht abstehen und in einer zweiten Position an den Klemmflächen (13, 14) des Profilträgers (3) angreifen;
wobei der Profilträger (3) einen Kanal (22) aufweist, wobei sich der Kanal (22) in Längsrichtung des Profilträgers erstreckt und in der Kontaktfläche und zwischen den beiden Klemmflächen (13, 14) angeordnet ist,
wobei die Breite und die Tiefe des Kanals (22) größer sind als die Breite und die Höhe des ersten Paares von Klemmfingern (5) und als die Breite und Höhe des zweiten Paares von Klemmfingern (8, 9).

2. Kombination nach Anspruch 1, wobei die Projektion des zweiten Paares von Klemmfingern (8, 9), in Klemmrichtung des zweiten Paares von Klemmfingern (8, 9) gesehen, in der ersten Position des Profilträgers an der Klammer (2) in den Querschnitt des Kanals (22) fällt und wobei die Projektion des ersten Paares von Klemmfingern (5), in Klemmrichtung des ersten Paares von Klemmfingern (5) gesehen, in der zweiten Position des Profilträgers (3) an der Klammer (2) in den Querschnitt des Kanals (22) fällt.

3. Kombination nach Anspruch 1 oder 2, wobei an beiden Klemmflächen eine Rippe (15, 16) angeordnet ist, wobei die Rippe sich in Längsrichtung des Profilträgers (3) erstreckt und wobei zumindest die Klemmfinger des ersten Paares von Klemmfingern (5) jeweils mit einer federnden Zunge (6) versehen sind, die sich von der Oberseite des Klemmfingers nach unten in Richtung der Klemmfläche und in Richtung der Stützfläche erstreckt und hier hinter der Rippe (15, 16) an der betreffenden Klemmfläche (13, 14) einhakt.

4. Kombination nach Anspruch 3, wobei jeder der Klemmfinger des ersten Paares von Klemmfingern (5) ferner mit einer Entkopplungszunge (7) versehen ist, die fest an der Oberseite des Klemmfingers angeordnet ist und wobei sich die Entkopplungszunge (7) von der Stützfläche und von der Klemmfläche (13, 14) weg erstreckt.

5. Kombination nach einem der vorhergehenden Ansprüche, wobei eine Längsnut (17, 18) in mindestens einer der Klemmflächen (13, 14) angeordnet ist, wobei die Längsnut (17, 18) eine überhängende Kante (19, 20) aufweist, welche Kante sich in der Ebene der Klemmfläche (13, 14) erstreckt;
und wobei in der zweiten Position des Profilträgers (3) auf der Klammer (2) mindestens ein Klemmfinger des zweiten Paares von Klemmfingern (8, 9) in die Längsnut hineinragt und hinter der überhängenden Kante (19, 20) einhakt.

6. Kombination nach einem der vorhergehenden Ansprüche, ferner umfassend einem Ziegelhaken (1), wobei die Klammer (2) an einem Endteil des Ziegelhakens (1) angeordnet ist.

## Revendications

1. Combinaison d'une pince (2) et d'une poutre profilée (3) dans laquelle la poutre profilée (3) a une surface de contact (21) et a deux surfaces de serrage parallèles (13, 14) perpendiculaires à la surface de contact et opposées l'une à l'autre, lesquelles surfaces de serrage (13, 14) s'étendent dans la direction longitudinale de la poutre profilée (3)
dans laquelle la pince (2) comprend :
- un corps de support avec une surface de support sur laquelle la poutre profilée avec la surface de contact est supportée tout en étant couchée contre elle ;
- une première paire de doigts de serrage (5) debout à partir de la surface de support et s'engageant sur les surfaces de serrage (13, 14) de la poutre profilée (3) dans une première position ;
- une seconde paire de doigts de serrage (8, 9) debout à partir de la surface de support et s'engageant sur les surfaces de serrage (13, 14) de la poutre profilée (3) dans une seconde position ;
dans laquelle la poutre profilée (3) comprend un canal (22), lequel canal (22) s'étend dans la direction longitudinale de la poutre profilée et est disposé dans la surface de contact et entre les deux surfaces de serrage (13, 14),
dans laquelle la largeur et la profondeur du canal (22) sont supérieures à la largeur et à la hauteur de la première paire de doigts de serrage (5) et à la largeur et à la hauteur de la seconde paire de doigts de serrage (8, 9).

2. Combinaison selon la revendication 1, dans laquelle la projection de la seconde paire de doigts de serrage (8,9), vue dans la direction de serrage de la seconde paire de doigts de serrage (8,9), tombe à l'intérieur de la section transversale du canal (22) dans la première position de la poutre profilée sur la pince (2), et dans laquelle la projection de la première paire de doigts de serrage (5), vue dans la direction de serrage de la première paire de doigts de serrage (5), tombe à l'intérieur de la section transversale du canal (22) dans la seconde position de la poutre profilée (3) sur la pince (2).

3. Combinaison selon la revendication 1 ou 2, dans laquelle une nervure (15, 16) est disposée sur les deux surfaces de serrage, laquelle nervure s'étend dans la direction longitudinale de la poutre profilée (3) et dans laquelle au moins les doigts de serrage de la première paire de doigts de serrage (5) sont chacun pourvus d'une languette élastique (6) qui s'étend du haut du doigt de serrage vers le bas, dans la direction de la surface de serrage et dans la direction de la surface de support, et s'accroche ici derrière la nervure (15, 16) sur la surface de serrage pertinente (13, 14).

4. Combinaison selon la revendication 3, dans laquelle chacun des doigts de serrage de la première paire de doigts de serrage (5) est en outre pourvu d'une languette de découplage (7), qui est disposée de manière fixe sur le dessus du doigt de serrage et dans laquelle la languette de découplage (7) s'étend à l'écart de la surface de support et de la surface de serrage (13, 14).

5. Combinaison selon l'une quelconque des revendications précédentes, dans laquelle une rainure longitudinale (17, 18) est disposée dans au moins l'une des surfaces de serrage (13, 14), laquelle rainure longitudinale (17, 18) a un bord en surplomb (19, 20), lequel bord s'étend dans le plan de la surface de serrage (13, 14) ;
et dans laquelle, dans la seconde position de la poutre profilée (3) sur la pince (2), au moins un doigt de serrage de la seconde paire de doigts de serrage (8, 9) fait saillie dans la rainure longitudinale et s'accroche derrière le bord en surplomb (19, 20).

6. Combinaison selon l'une quelconque des revendications précédentes, comprenant en outre un crochet de tuile (1), dans laquelle la pince (2) est disposée sur une partie d'extrémité du crochet de tuile (1).
